# EUROPEAN PATENT APPLICATION

(11) **EP 4 738 817 A1**
(43) Date of publication of application: **06.05.2026**
(21) Application number: 24832127.5
(22) Date of filing: 28.06.2024
(51) Int. Cl.: H04N 19/11, H04N 19/136, H04N 19/176

(54) **INTRA PREDICTION DEVICE, ENCODING DEVICE, DECODING DEVICE, AND PROGRAM**

(30) Priority: 29.06.2023 JP 2023107062
(71) Applicant: Nippon Hoso Kyokai, Tokyo 150-8001 (JP)
(72) Inventor: NEMOTO, Shimpei, Tokyo 157-8510 (JP); IWAMURA, Shunsuke, Tokyo 157-8510 (JP); ICHIGAYA, Atsuro, Tokyo 157-8510 (JP)
(74) Representative: SSM Sandmair
(86) International application number: PCT/JP2024/023601
(87) International publication number: WO 2025/005270

(57) **Abstract**

An intra prediction apparatus that performs intra prediction in units of blocks obtained by dividing an image includes: an area specification means configured to specify a decoded area around a target block for intra prediction as a prediction trial area, and specify a decoded area adjacent to the prediction trial area as a reference area; a cost calculation means configured to calculate a cost using a cost function by performing, for each intra prediction mode, a prediction trial of predicting the prediction trial area from the reference area; and a prediction mode determination means configured to determine at least one intra prediction mode to be used for the intra prediction according to the cost. The prediction trial area includes a plurality of sub-areas classified according to a relative positional relationship with the target block. The cost calculation means performs weighting for each of the sub-areas when calculating the cost of each intra prediction mode.

## Description

### TECHNICAL FIELD

The present disclosure relates to an intra prediction apparatus, an encoding apparatus, a decoding apparatus, and a program.

### BACKGROUND ART

In video coding schemes such as HEVC (High Efficiency Video Coding) and VVC (Versatile Video Coding), an encoding apparatus generates a prediction block, which is a prediction image for a coding block (CU: Coding Unit) obtained by dividing an original image into block units, and transforms, quantizes, and entropy-encodes a difference between the coding block of the original image and the prediction block to transmit the difference.

As methods for generating a prediction image, inter prediction using correlation between frames and intra prediction using correlation within a frame are available. As intra prediction methods, in addition to Planar prediction and DC prediction, directional prediction which is linear prediction can be selected from 33 directions in HEVC and 65 directions in VVC.

In intra prediction, a technique is being studied in which a peripheral area of a target block to be encoded is used as a prediction trial area (also referred to as a "template") and using reference pixels for the prediction trial area to perform a prediction trial, thereby deriving an intra prediction mode and using this intra prediction mode for prediction (see, for example, Non-Patent Literature 1). This technique utilizes the fact that cost calculations for intra prediction in the prediction trial area match in both the encoding apparatus and the decoding apparatus. According to such a technique, for example, it is possible to reduce the overhead of signaling the intra prediction mode and to derive an additional directional prediction that subdivides intervals between conventional prediction directions to form a new prediction direction.

### CITATION LIST

### NON-PATENT LITERATURE

Non-Patent Literature 1 JVET-C0061 "Decoder-side intra mode derivation"

### SUMMARY OF INVENTION

An intra prediction apparatus according to a first aspect is an intra prediction apparatus that performs intra prediction in units of blocks obtained by dividing an image, comprising: an area specification means configured to specify a decoded area around a target block for the intra prediction as a prediction trial area, and specify a decoded area adjacent to the prediction trial area as a reference area; a cost calculation means configured to calculate a cost using a cost function by performing, for each intra prediction mode, a prediction trial of predicting the prediction trial area from the reference area; and a prediction mode determination means configured to determine at least one intra prediction mode to be used for the intra prediction according to the cost. The prediction trial area includes a plurality of sub-areas classified according to a relative positional relationship with the target block. The cost calculation means performs weighting for each of the sub-areas when calculating the cost.

An encoding apparatus according to a second aspect comprises the intra prediction apparatus according to the first aspect.

A decoding apparatus according to a third aspect comprises the intra prediction apparatus according to the first aspect.

A program according to a fourth aspect causes a computer to function as the intra prediction apparatus according to the first aspect.

### BRIEF DESCRIPTION OF DRAWINGS

FIG. 1 is a diagram showing a configuration of an encoding apparatus according to an embodiment.
FIG. 2 is a diagram for explaining intra prediction modes according to the embodiment.
FIG. 3 is a diagram for explaining TIMD according to the embodiment.
FIG. 4 is a diagram showing a configuration of an intra predictor according to the embodiment.
FIG. 5 is a diagram for explaining an operation of the intra predictor according to the embodiment.
FIG. 6 is a diagram showing a configuration of a decoding apparatus according to the embodiment.
FIG. 7 is a diagram showing a configuration of an intra predictor according to the embodiment.
FIG. 8 is a diagram showing an example of an operation of the intra predictor according to the embodiment.
FIG. 9 is a diagram for explaining a modification of TIMD according to the embodiment.

### DESCRIPTION OF EMBODIMENTS

In a derivation technique of an intra prediction mode using a template, a prediction mode having the best result of cost calculation of intra prediction in a prediction trial area on an encoding apparatus side and a decoding apparatus side, or a prediction mode for which a result of cost calculation exceeds a threshold even during derivation, is selected. However, there is room for improvement in such a technique from the viewpoint of improving prediction accuracy in intra prediction.

Therefore, the present disclosure provides an intra prediction apparatus, an encoding apparatus, a decoding apparatus, and a program capable of improving prediction accuracy in intra prediction.

An encoding apparatus and a decoding apparatus including an intra prediction apparatus according to an embodiment will be described with reference to the drawings. The encoding apparatus and the decoding apparatus respectively perform encoding and decoding of video (i.e., moving images) represented by MPEG. In the following description of the drawings, identical or similar parts are denoted by identical or similar reference numerals.

### (1) Encoding Apparatus

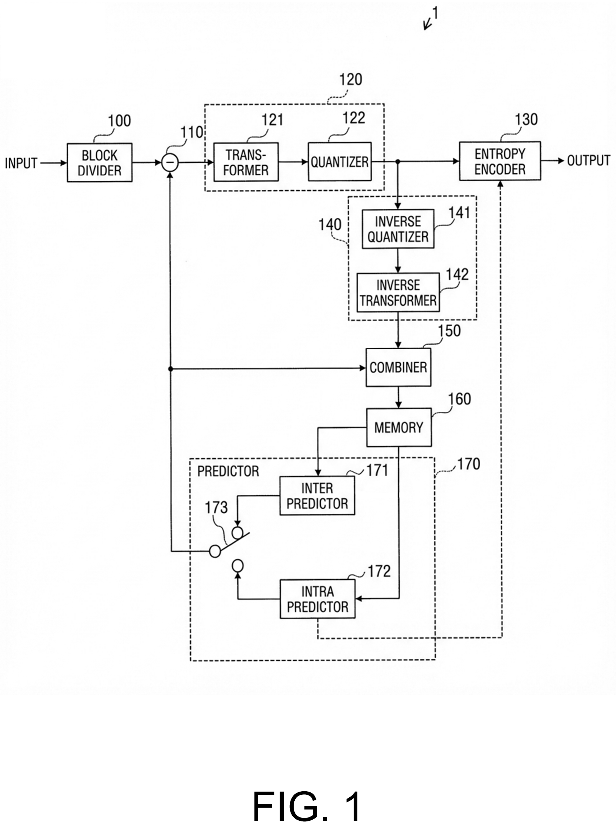

The encoding apparatus according to the present embodiment will be described with reference to FIGS. 1 to 5.

### (1.1) Configuration of Encoding Apparatus

First, the configuration of an encoding apparatus 1 according to the present embodiment will be described. FIG. 1 is a diagram showing the configuration of the encoding apparatus 1 according to the present embodiment.

The encoding apparatus 1 is an apparatus that encodes an input image to generate a bitstream and outputs the bitstream. The encoding apparatus 1 includes a block divider 100, a subtractor 110, a transformer/quantizer 120, an entropy encoder 130, an inverse quantizer/inverse transformer 140, a combiner 150, a memory 160, and a predictor 170.

The block divider 100 divides an original image, which is an input image in units of frames (or pictures) constituting a moving image, into a plurality of image blocks, and outputs the image blocks obtained by the division to the subtractor 110. The size of the image block is, for example, 32×32 pixels, 16×16 pixels, 8×8 pixels, or 4×4 pixels. The shape of the image block is not limited to a square but may be a rectangle (non-square). The image block is a unit for which the encoding apparatus 1 performs encoding and a unit for which the decoding apparatus performs decoding. Such an image block is also referred to as a coding block (CU).

The input image is composed of a luma signal (Y) and chroma signals (Cb, Cr), and each pixel in the input image is composed of a luma component (Y) and chroma components (Cb, Cr). The encoding apparatus 1 supports, for example, three chroma formats of 4:4:4, 4:2:2, and 4:2:0. The block divider 100 outputs a luma block by performing block division on the luma signal, and outputs a chroma block by performing block division on the chroma signals. The shape of the block division may be the same for the luma signal and the chroma signals, or the division shape may be controllable independently for the luma signal and the chroma signals.

The subtractor 110 calculates a prediction residual representing a difference (error) between the coding block output by the block divider 100 and a prediction block obtained by the predictor 170 predicting the coding block. Specifically, the subtractor 110 calculates the prediction residual by subtracting each pixel value of the prediction block from each pixel value of the block, and outputs the calculated prediction residual to the transformer/quantizer 120.

The transformer/quantizer 120 performs a transform process and a quantization process in units of blocks. The transformer/quantizer 120 includes a transformer 121 and a quantizer 122.

The transformer 121 performs a transform process on the prediction residual output by the subtractor 110 to calculate transform coefficients, and outputs the calculated transform coefficients to the quantizer 122. The transform refers to, for example, Discrete Cosine Transform (DCT), Discrete Sine Transform (DST), Karhunen Loeve Transform (KLT), or the like. The transform process includes a transform skip in which the transform process is not performed. The transform skip includes a transform applying a transform process only horizontally or a transform applying a transform process only vertically. Further, the transformer 121 may perform a secondary transform process of further applying a transform process to the transform coefficients obtained by the transform process. The secondary transform process may be applied only to a partial area of the transform coefficients.

The quantizer 122 quantizes the transform coefficients output by the transformer 121 using a quantization parameter and a quantization matrix, and outputs quantized transform coefficients, which are the quantized transform coefficients, to the entropy encoder 130 and the inverse quantizer/inverse transformer 140. Note that the quantization parameter is a parameter commonly applied to each transform coefficient in a block and is a parameter determining the coarseness of quantization. The quantization matrix is a matrix having, as elements, quantization values used when quantizing each transform coefficient.

The entropy encoder 130 performs entropy encoding on the quantized transform coefficients output by the quantizer 122, performs data compression to generate a bitstream, and outputs the bitstream to the outside of the encoding apparatus 1. For entropy encoding, Huffman coding, CABAC (Context-based Adaptive Binary Arithmetic Coding), or the like can be used. Note that the entropy encoder 130 receives information regarding prediction (flags and indices) from the predictor 170, and also performs encoding and bitstream output of the input information.

The inverse quantizer/inverse transformer 140 performs an inverse quantization process and an inverse transform process in units of blocks. The inverse quantizer/inverse transformer 140 includes an inverse quantizer 141 and an inverse transformer 142.

The inverse quantizer 141 performs an inverse quantization process corresponding to the quantization process performed by the quantizer 122. Specifically, the inverse quantizer 141 reconstructs transform coefficients by inversely quantizing the quantized transform coefficients output by the quantizer 122 using the quantization parameter and the quantization matrix, and outputs the reconstructed transform coefficients to the inverse transformer 142.

The inverse transformer 142 performs an inverse transform process corresponding to the transform process performed by the transformer 121. For example, when the transformer 121 has performed the discrete cosine transform, the inverse transformer 142 performs an inverse discrete cosine transform. The inverse transformer 142 performs the inverse transform process on the transform coefficients output by the inverse quantizer 141 to reconstruct the prediction residual, and outputs a reconstructed prediction residual, which is the reconstructed prediction residual, to the combiner 150.

The combiner 150 synthesizes the reconstructed prediction residual output by the inverse transformer 142 and the prediction block output by the predictor 170 by adding them in units of pixels. The combiner 150 decodes (reconstructs) the block by adding each pixel value of the reconstructed prediction residual and each pixel value of the prediction block, and outputs the reconstructed block to the memory 160. Hereinafter, the reconstructed block is also referred to as a decoded block.

The memory 160 stores the reconstructed block output by the combiner 150, and accumulates the reconstructed block as a decoded image in units of frames. The memory 160 outputs the stored reconstructed block or decoded image to the predictor 170. Note that a loop filter may be provided between the combiner 150 and the memory 160.

The predictor 170 performs prediction in units of blocks. The predictor 170 includes an inter predictor 171, an intra predictor 172, and a switcher 173.

The inter predictor 171 calculates a motion vector by a method such as block matching using the decoded image stored in the memory 160 as a reference image, predicts the coding block to generate an inter prediction block, and outputs the generated inter prediction block to the switcher 173. In this case, the inter predictor 171 selects an optimal inter prediction method from inter prediction using a plurality of reference images (typically, bi-prediction) and inter prediction using one reference image (uni-prediction), and performs inter prediction using the selected inter prediction method. The inter predictor 171 outputs information regarding inter prediction (motion vector, etc.) to the entropy encoder 130.

The intra predictor 172 generates an intra prediction block by referring to decoded pixels around the block among the decoded images stored in the memory 160, and outputs the generated intra prediction block to the switcher 173. Generally, the intra predictor 172 selects an intra prediction mode to be applied to a prediction coding block of intra prediction from a plurality of intra prediction modes, and predicts the coding block of intra prediction using the selected intra prediction mode. The intra predictor 172 outputs information regarding the selected intra prediction mode to the entropy encoder 130.

The switcher 173 switches between the inter prediction block output by the inter predictor 171 and the intra prediction block output by the intra predictor 172, and outputs one of the prediction blocks to the subtractor 110 and the combiner 150.

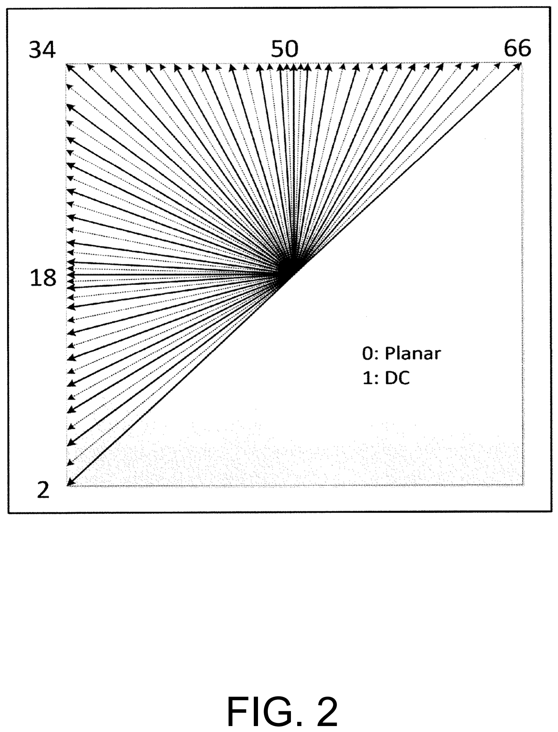

FIG. 2 is a diagram for explaining intra prediction modes according to the present embodiment. The intra predictor 172 performs intra prediction on a coding block. In the illustrated example, candidates for the intra prediction mode of a luma block are Planar prediction, DC prediction, and 65 types of directional predictions, which amount to a total of 67 types of intra prediction modes.

Mode "0" of the prediction modes is Planar prediction, mode "1" of the prediction modes is DC prediction, and modes "2" to "66" of the prediction modes are directional predictions. In the directional prediction, the direction of an arrow indicates a prediction direction (reference direction), the starting point of the arrow indicates the position of a pixel to be predicted, and the ending point of the arrow indicates the position of a reference pixel used for prediction of this pixel to be predicted (also referred to as a "reference pixel position"). A total of 65 modes are prepared for the directional prediction, and selectable prediction directions are determined by the shape (aspect ratio) of the block. Note that in the present embodiment, the directional prediction is assumed to be 65 directions, but the directional prediction may be more than 65 directions.

As prediction directions parallel to a diagonal line passing through the upper right vertex and the lower left vertex of the block, there are a mode "2" which is a prediction mode referring to the lower left direction and a mode "66" which is a prediction mode referring to the upper right direction, and mode numbers are assigned every predetermined angle clockwise from mode "2" to mode "66". Mode "34" is a prediction mode referring to the upper left direction. Specifically, when the horizontal direction is 0°, the prediction direction of mode "2" is -45°, the prediction direction of mode "18" is 0°, the prediction direction of mode "34" is 45°, the prediction direction of mode "50" is 90°, and the prediction direction of mode "66" is 135°. Note that mode "18" is also referred to as horizontal direction, and mode "50" is also referred to as vertical prediction.

In this case, each directional prediction less than mode "34", that is, modes "2" to "33", is a directional prediction referring to the left side of the coding block, and the prediction direction thereof is the left direction of the coding block. On the other hand, each directional prediction greater than mode "34", that is, modes "35" to "66", is a directional prediction referring to the upper side of the coding block, and the prediction direction thereof is the upper direction of the coding block.

### (1.2) Overview of Template-based Intra Mode Derivation

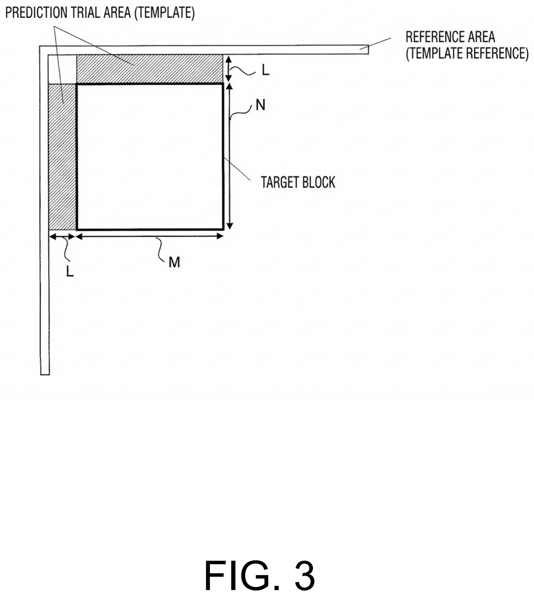

Next, an overview of template-based intra mode derivation according to the present embodiment will be described. The template-based intra mode derivation is also referred to as TIMD (Templated-based Intra Mode Derivation). FIG. 3 is a diagram for explaining TIMD according to the present embodiment. The intra predictor 172 according to the present embodiment performs intra prediction supporting TIMD.

In TIMD, the peripheral area of a target block of intra prediction is used as a prediction trial area (template), and the encoding side and the decoding side perform a prediction trial on the prediction trial area using a common algorithm, thereby deriving a common intra prediction mode on the encoding side and the decoding side. Therefore, it is possible to reduce the overhead of signaling the intra prediction mode and to derive an additional directional prediction that subdivides intervals between conventional prediction directions to form a new prediction direction. Note that the entropy encoder 130 may signal a flag indicating that TIMD is applied to the decoding side for a block to which TIMD is applied. Note that TIMD may be applied only to blocks of luma signals and may not be applied to blocks of chroma signals.

First, the intra predictor 172 specifies an adjacent decoded area adjacent to the target block as a prediction trial area (template), and specifies a decoded area outside the prediction trial area as a reference area. The reference area is a set of adjacent reference pixels (reference pixel line) on the left side and the upper side of the prediction trial area. The width L of the prediction trial area may be variably set according to the size of the target block (that is, width M × height N of the target block). For example, if the size of the target block is 8 or less, the width L of the prediction trial area may be set to 2, and otherwise, the width L of the prediction trial area may be set to 4.

Second, the intra predictor 172 calculates a cost using a cost function by performing, for each intra prediction mode, a prediction trial of predicting the prediction trial area from the reference area. The cost function may be, for example, SAD (Sum of Absolute Differences) or SATD (Sum of Absolute Transformed Differences). The intra predictor 172 predicts the prediction trial area from the reference area using a candidate intra prediction mode, and calculates SAD or SATD between the prediction result (each prediction pixel) and the prediction trial area (each decoded pixel) as the cost. In this case, the number of conventional directional predictions is 65 (65 directions), but the number of directional predictions for which the prediction trial is performed may be 129 (129 directions). That is, the additional directional prediction that subdivides intervals between conventional prediction directions to form a new prediction direction is applicable.

Third, the intra predictor 172 determines at least one intra prediction mode to be used for intra prediction according to the cost calculated for each intra prediction mode. For example, the intra predictor 172 performs cost calculation for all candidate intra prediction modes, and determines an intra prediction mode having the minimum cost as a final intra prediction mode of the target block. However, the intra predictor 172 does not necessarily have to perform cost calculation for all candidate intra prediction modes. While performing cost calculation for each candidate intra prediction mode, if the calculated cost satisfies a predetermined threshold condition, the intra predictor 172 may determine the intra prediction mode satisfying the threshold condition as the final intra prediction mode of the target block.

Fourth, the intra predictor 172 predicts each pixel of the target block by the final intra prediction mode determined based on the cost using the adjacent decoded area adjacent to the target block as the reference area (reference pixels), and generates a prediction block (intra prediction block).

Note that the number of final intra prediction modes determined based on the calculated cost is not limited to one, and two or more intra prediction modes selected in ascending order of cost may be determined. For example, the intra predictor 172 may determine two final intra prediction modes based on the calculated costs, generate two prediction blocks by intra prediction using each of these two intra prediction modes, and output a final prediction block by performing weighted averaging (weighted combining) of the two prediction blocks according to the costs of the respective intra prediction modes.

### (1.3) Configuration of Intra Predictor

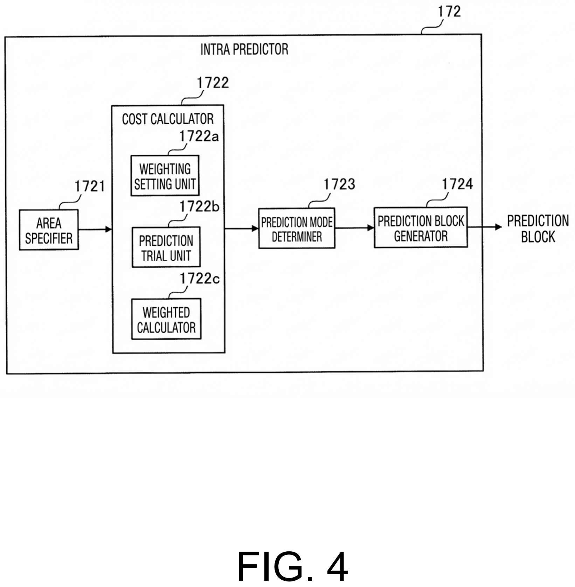

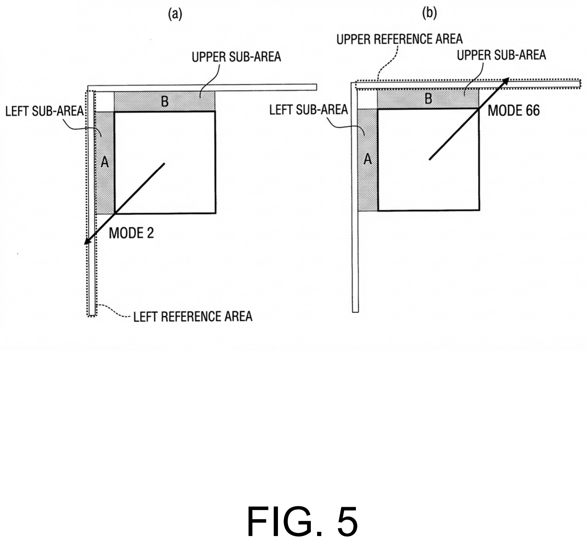

Next, the configuration of the intra predictor 172 according to the present embodiment will be described. FIG. 4 is a diagram showing the configuration of the intra predictor 172 according to the present embodiment. FIG. 5 is a diagram for explaining an operation of the intra predictor 172 according to the present embodiment.

As shown in FIG. 4, the intra predictor 172 includes an area specifier 1721, a cost calculator 1722, a prediction mode determiner 1723, and a prediction block generator 1724.

The area specifier 1721 specifies an adjacent decoded area adjacent to a target block for intra prediction as a prediction trial area, and specifies a decoded area outside the prediction trial area as a reference area. The prediction trial area includes a plurality of sub-areas classified according to a relative positional relationship with the target block. In the present embodiment, as shown in FIG. 5, the plurality of sub-areas includes a left sub-area A which is an adjacent decoded area on the left side of the target block, and an upper sub-area B which is an adjacent decoded area on the upper side of the target block.

The cost calculator 1722 calculates a cost (SAD or SATD) using a cost function by performing, for each intra prediction mode, a prediction trial of predicting the prediction trial area from the reference area. In the present embodiment, the cost calculator 1722 performs weighting for each sub-area when calculating the cost of each intra prediction mode. That is, the cost calculator 1722 considers the importance of each sub-area determined according to the intra prediction mode to be tried, and performs weighting to emphasize the cost for the sub-area having high importance. Thereby, prediction accuracy in intra prediction can be improved.

The cost calculator 1722 sets a weight for each of the plurality of sub-areas according to a reference area position, which is a position of the reference area referred to in the intra prediction mode used for the prediction trial, and respective positions of the plurality of sub-areas. Specifically, the cost calculator 1722 sets a weight for a second sub-area whose distance from the reference area position is a second distance longer than a first distance to be larger than a weight for a first sub-area whose distance from the reference area position is the first distance.

FIG. 5(a) is a diagram for explaining cost calculation when the intra prediction mode to be tried is mode 2. In mode 2, the prediction direction is -45° when the horizontal direction is 0°. Mode 2 is a directional prediction referring to the left reference area among the left and upper reference areas. In the case of mode 2, the reference area position to be referred to is the left side, and this left reference area and the left sub-area A are in an adjacent relationship, but the upper sub-area B is separated from the left reference area.

In such a case, since the left reference area and the left sub-area A are in an adjacent relationship, when the left sub-area A is predicted by mode 2, the prediction result of the left sub-area A has high prediction accuracy. On the other hand, when the upper sub-area B is predicted by mode 2, the prediction result of the upper sub-area B has lower prediction accuracy than the left sub-area A. Therefore, in the cost calculation, the cost calculator 1722 sets a weight such that the upper sub-area B is emphasized relative to the left sub-area A.

In the case of mode 2, first, the cost calculator 1722 calculates SAD (or SATD) between the prediction result of the left sub-area A and the left sub-area A as a cost A, and calculates SAD (or SATD) between the prediction result of the upper sub-area B and the upper sub-area B as a cost B. Second, the cost calculator 1722 weights the cost A with a first weight and weights the cost B with a second weight larger than the first weight. Third, the cost calculator 1722 calculates the sum (or average) of the weighted costs A and B as the cost of mode 2.

Thereby, the cost calculator 1722 can calculate a weighted cost emphasizing the upper sub-area B by considering the upper sub-area B having low prediction accuracy as a sub-area having high importance, so that a more appropriate cost can be calculated for mode 2. Note that although FIG. 5(a) has been described taking mode 2 as an example, similar weighted cost calculation is applicable to all directional predictions referring to the left side (for example, modes 2 to 33 and prediction modes intermediate therebetween).

FIG. 5(b) is a diagram for explaining cost calculation when the intra prediction mode to be tried is mode 66. In mode 66, the prediction direction is 135° when the horizontal direction is 0°. Mode 66 is a directional prediction referring to the upper reference area among the left and upper reference areas. In the case of mode 66, the reference area position to be referred to is the upper side, and this upper reference area and the upper sub-area B are in an adjacent relationship, but the left sub-area A is separated from the upper reference area.

In such a case, since the upper reference area and the upper sub-area B are in an adjacent relationship, when the upper sub-area B is predicted by mode 66, the prediction result of the upper sub-area B has high prediction accuracy. On the other hand, when the left sub-area A is predicted by mode 66, the prediction result of the left sub-area A has lower prediction accuracy than the upper sub-area B. Therefore, in the cost calculation, the cost calculator 1722 sets a weight such that the left sub-area A is emphasized relative to the upper sub-area B.

In the case of mode 66, first, the cost calculator 1722 calculates SAD (or SATD) between the prediction result of the left sub-area A and the left sub-area A as a cost A, and calculates SAD (or SATD) between the prediction result of the upper sub-area B and the upper sub-area B as a cost B. Second, the cost calculator 1722 weights the cost B with a first weight and weights the cost A with a second weight larger than the first weight. Then, the cost calculator 1722 calculates the sum (or average) of the weighted costs A and B as the cost of mode 66.

Thereby, the cost calculator 1722 can calculate a weighted cost emphasizing the left sub-area A by considering the left sub-area A having low prediction accuracy as a sub-area having high importance, so that a more appropriate cost can be calculated for mode 66. Note that although FIG. 5(b) has been described taking mode 66 as an example, similar weighted cost calculation is applicable to all directional predictions referring to the upper side (for example, modes 35 to 66 and prediction modes intermediate therebetween).

In the present embodiment, the cost calculator 1722 includes a weight setting unit 1722a, a prediction trial unit 1722b, and a weighted calculator 1722c. The weight setting unit 1722a sets a weight for each sub-area according to the intra prediction mode for each intra prediction mode to be tried. The prediction trial unit 1722b performs a prediction trial for each sub-area by the intra prediction mode. The weighted calculator 1722c calculates a cost for each sub-area and applies the weight according to the result of the prediction trial to derive a weighted cost of the intra prediction mode.

For example, the weighted calculator 1722c may calculate the weighted cost of each intra prediction mode by a calculation formula "Weighted Cost = Cost A × (1 - α) + Cost B × α". However, Cost A is the cost calculated for the left sub-area A, Cost B is the cost calculated for the upper sub-area B, and α is a variable (weight) taking a value from 0 to 1.

The weight setting unit 1722a sets, for example, 0.8 as the variable α for all directional predictions referring only to the left reference area. In this case, "Weighted Cost = Cost A × 0.2 + Cost B × 0.8" is obtained, and cost calculation emphasizing the upper sub-area B is possible. On the other hand, for all directional predictions referring only to the upper reference area, the weight setting unit 1722a sets, for example, 0.2 as the variable α. In this case, "Weighted Cost = Cost A × 0.8 + Cost B × 0.2" is obtained, and cost calculation emphasizing the left sub-area A is possible. Note that the weight setting unit 1722a may set 0.5 as the variable α for all directional predictions referring to both the left reference area and the upper reference area, and for Planar prediction and DC prediction. In this case, "Weighted Cost = Cost A × 0.5 + Cost B × 0.5" is obtained.

The prediction mode determiner 1723 determines at least one intra prediction mode to be used for intra prediction according to the weighted cost calculated by the cost calculator 1722 for each intra prediction mode. For example, the prediction mode determiner 1723 performs cost calculation for all candidate intra prediction modes, and determines an intra prediction mode having the minimum cost as the final intra prediction mode of the target block. However, the cost calculator 1722 does not necessarily have to perform cost calculation for all candidate intra prediction modes. While the cost calculator 1722 performs cost calculation for each candidate intra prediction mode, if the calculated cost satisfies a predetermined threshold condition, the prediction mode determiner 1723 may determine the intra prediction mode satisfying the threshold condition as the final intra prediction mode of the target block. The prediction mode determiner 1723 may determine two or more intra prediction modes selected in ascending order of cost as the final intra prediction modes of the target block.

The prediction block generator 1724 predicts the target block by intra prediction using the at least one intra prediction mode determined by the prediction mode determiner 1723 to generate a prediction block. When the prediction mode determiner 1723 determines one intra prediction mode, the prediction block generator 1724 generates an intra prediction block by the one intra prediction mode using decoded pixels around the target block as reference pixels, and outputs the generated intra prediction block. When the prediction mode determiner 1723 determines a plurality of intra prediction modes, the prediction block generator 1724 may generate a plurality of prediction blocks by intra prediction using each of the plurality of intra prediction modes, and output a prediction block obtained by weighted averaging (weighted combining) the plurality of prediction blocks according to the cost of each intra prediction mode.

### (2) Decoding Apparatus

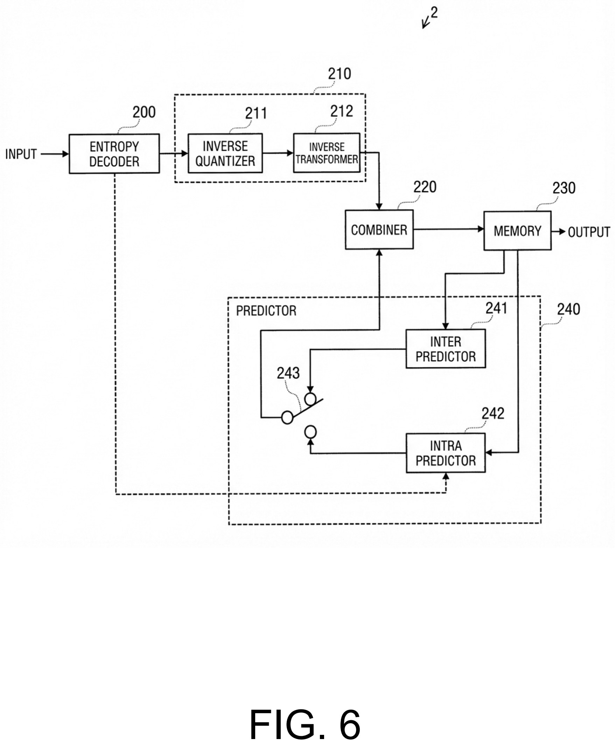

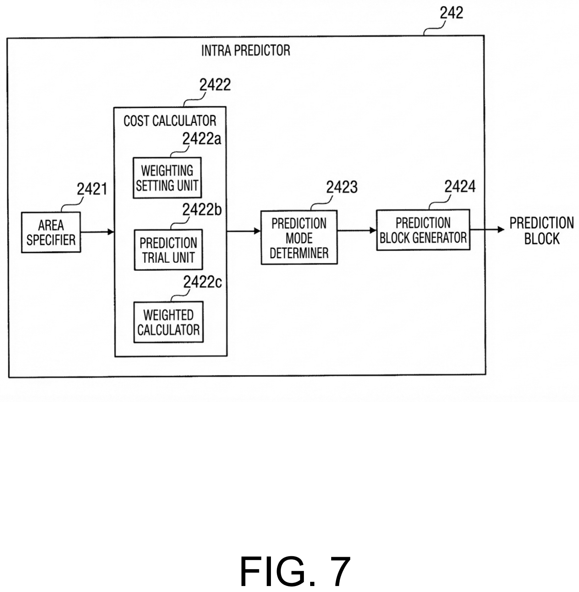

Next, a decoding apparatus according to the present embodiment will be described with reference to FIGS. 6 and 7.

FIG. 6 is a diagram showing a configuration of a decoding apparatus 2 according to the present embodiment. The decoding apparatus 2 is an apparatus that derives and outputs a decoded image from an input bitstream. The decoding apparatus 2 includes an entropy decoder 200, an inverse quantizer/inverse transformer 210, a combiner 220, a memory 230, and a predictor 240.

The entropy decoder 200 decodes the bitstream generated by the encoding apparatus 1 and outputs quantized transform coefficients to the inverse quantizer/inverse transformer 210. Also, the entropy decoder 200 acquires information regarding prediction (intra prediction and inter prediction) and outputs the acquired information to the predictor 240. In the present embodiment, the entropy decoder 200 may acquire a flag indicating that TIMD is applied and output the flag to the predictor 240.

The inverse quantizer/inverse transformer 210 performs an inverse quantization process and an inverse transform process in units of blocks. The inverse quantizer/inverse transformer 210 includes an inverse quantizer 211 and an inverse transformer 212.

The inverse quantizer 211 performs an inverse quantization process corresponding to the quantization process performed by the quantizer 122 of the encoding apparatus 1. The inverse quantizer 211 reconstructs transform coefficients of a coding block by inversely quantizing the quantized transform coefficients output by the entropy decoder 200 using a quantization parameter and a quantization matrix, and outputs the reconstructed transform coefficients to the inverse transformer 212.

The inverse transformer 212 performs an inverse transform process corresponding to the transform process performed by the transformer 121 of the encoding apparatus 1. The inverse transformer 212 performs the inverse transform process on the transform coefficients output by the inverse quantizer 211 to reconstruct the prediction residual, and outputs a reconstructed prediction residual, which is the reconstructed prediction residual, to the combiner 220. The inverse transform process includes a transform skip in which the inverse transform process is not performed. Further, the inverse transformer 212 may perform an inverse secondary transform process of further applying an inverse transform process to a signal obtained by the inverse transform process.

The combiner 220 synthesizes the prediction residual output by the inverse transformer 212 and the prediction block output by the predictor 240 by adding them in units of pixels, decodes (reconstructs) the original block, and outputs the reconstructed block to the memory 230.

The memory 230 stores the reconstructed block output by the combiner 220, and accumulates the reconstructed block as a decoded image in units of frames. The memory 230 outputs the reconstructed block or decoded image to the predictor 240. Also, the memory 230 outputs the decoded image in units of frames to the outside of the decoding apparatus 2. Note that a loop filter may be provided between the combiner 220 and the memory 230.

The predictor 240 performs prediction in units of blocks. The predictor 240 includes an inter predictor 241, an intra predictor 242, and a switcher 243.

The inter predictor 241 predicts a coding block by inter prediction using the decoded image stored in the memory 230 as a reference image. The inter predictor 241 generates an inter prediction block by performing inter prediction according to motion vector information and the like output by the entropy decoder 200, and outputs the generated inter prediction block to the switcher 243.

The intra predictor 242 generates an intra prediction block by referring to decoded pixels around a block to be predicted (coding block) among the decoded images stored in the memory 230, and outputs the generated intra prediction block to the switcher 243. The intra predictor 242 according to the present embodiment performs intra prediction supporting the above-described TIMD.

The switcher 243 switches between the inter prediction block output by the inter predictor 241 and the intra prediction block output by the intra predictor 242, and outputs one of the prediction blocks to the combiner 220.

FIG. 7 is a diagram showing a configuration of the intra predictor 242 according to the present embodiment. As shown in FIG. 7, the intra predictor 242 includes an area specifier 2421, a cost calculator 2422, a prediction mode determiner 2423, and a prediction block generator 2424. In this case, the area specifier 2421, the cost calculator 2422, the prediction mode determiner 2423, and the prediction block generator 2424 perform the same processes as the area specifier 1721, the cost calculator 1722, the prediction mode determiner 1723, and the prediction block generator 1724 on the encoding side, respectively.

### (3) Operation Example of Intra Prediction

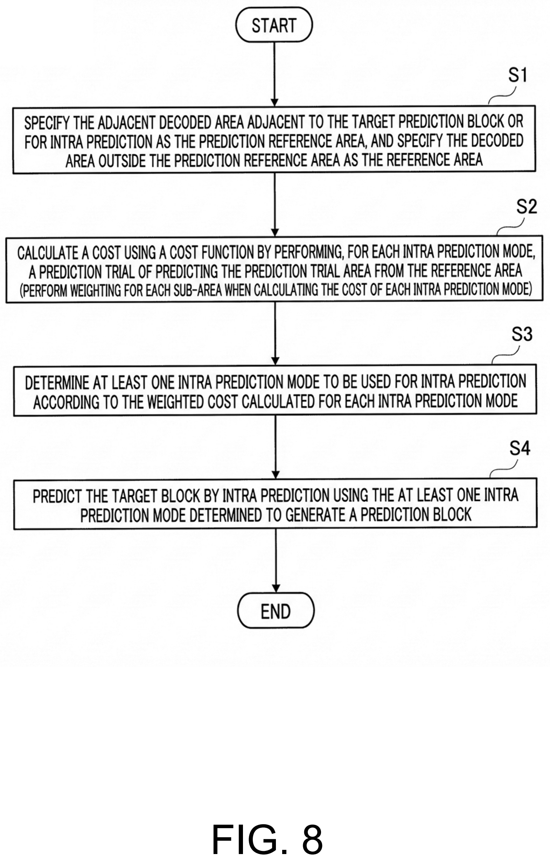

Next, an operation example of intra prediction according to the present embodiment will be described. FIG. 8 is a diagram showing an operation example of the intra predictor 242 on the decoding side according to the present embodiment. In this case, the operation of the intra predictor 242 on the decoding side will be described as an example, but the intra predictor 172 on the encoding side also performs the same operation as the intra predictor 242 on the decoding side.

In step S1, the area specifier 2421 specifies an adjacent decoded area adjacent to a target block for intra prediction as a prediction trial area, and specifies a decoded area outside the prediction trial area as a reference area. As shown in FIG. 5, the prediction trial area includes a left sub-area A which is an adjacent decoded area on the left side of the target block, and an upper sub-area B which is an adjacent decoded area on the upper side of the target block.

In step S2, the cost calculator 2422 calculates a cost (SAD or SATD) using a cost function by performing, for each intra prediction mode, a prediction trial of predicting the prediction trial area from the reference area. The cost calculator 2422 performs weighting for each sub-area when calculating the cost of each intra prediction mode. That is, the cost calculator 2422 considers the importance of each sub-area determined according to the intra prediction mode to be tried, and performs weighting to emphasize the cost for the sub-area having high importance. As described above, the cost calculator 2422 may calculate the weighted cost of each intra prediction mode by the calculation formula "Weighted Cost = Cost A × (1 - α) + Cost B × α". However, Cost A is the cost calculated for the left sub-area A, Cost B is the cost calculated for the upper sub-area B, and α is a variable (weight) taking a value from 0 to 1.

For example, assuming the horizontal direction is 0°, the cost calculator 2422 performs weighted cost calculation as follows for each directional prediction.
1) Each intra prediction mode in the range where the prediction direction is -45° to 0° (prediction modes 2 to 18):
   These intra prediction modes are directional predictions referring only to the left reference area. Therefore, the cost calculator 2422 sets a value larger than 0.5 as the variable α. For example, the variable α = 0.8. In this case, "Weighted Cost = Cost A × 0.2 + Cost B × 0.8" is obtained, and the cost calculator 2422 performs cost calculation in which the weight of the upper sub-area B is increased.
2) Each intra prediction mode in the range where the prediction direction is 0° to 90° (prediction modes 18 to 50):
   These intra prediction modes are directional predictions referring to both the left reference area and the upper reference area. Therefore, the cost calculator 2422 sets 0.5 as the variable α. In this case, "Weighted Cost = Cost A × 0.5 + Cost B × 0.5" is obtained, and the cost calculator 2422 performs cost calculation in which equal weights are given to the left sub-area A and the upper sub-area B.
3) Each intra prediction mode in the range where the prediction direction is 90° to 135° (prediction modes 50 to 66):
   These intra prediction modes are directional predictions referring only to the upper reference area. Therefore, the cost calculator 2422 sets a value smaller than 0.5 as the variable α. For example, the variable α = 0.2. In this case, "Weighted Cost = Cost A × 0.8 + Cost B × 0.2" is obtained, and the cost calculator 2422 performs cost calculation in which the weight of the left sub-area A is increased.

In step S3, the prediction mode determiner 2423 determines at least one intra prediction mode to be used for intra prediction according to the weighted cost calculated by the cost calculator 2422 for each intra prediction mode. For example, the prediction mode determiner 2423 determines an intra prediction mode having the minimum cost (weighted cost) as the final intra prediction mode of the target block.

In step S4, the prediction block generator 2424 predicts the target block by intra prediction using the at least one intra prediction mode determined by the prediction mode determiner 2423 to generate a prediction block.

### (4) Summary of Embodiment

Each of the intra predictors 172 and 242 according to the present embodiment constitutes an intra prediction apparatus that performs intra prediction in units of blocks obtained by dividing an image. Each intra prediction apparatus includes area specifiers 1721 and 2421 configured to specify an adjacent decoded area adjacent to a target block for intra prediction as a prediction trial area and specify a decoded area outside the prediction trial area as a reference area; cost calculators 1722 and 2422 configured to calculate a cost using a cost function by performing, for each intra prediction mode, a prediction trial of predicting the prediction trial area from the reference area; and prediction mode determiners 1723 and 2423 configured to determine at least one intra prediction mode to be used for intra prediction according to the cost. The prediction trial area includes a plurality of sub-areas classified according to a relative positional relationship with the target block. The cost calculators 1722 and 2422 perform weighting for each sub-area when calculating the cost of each intra prediction mode. Thereby, in the case of performing template-based intra mode derivation, it is possible to improve prediction accuracy in intra prediction.

### (5) Other Embodiments

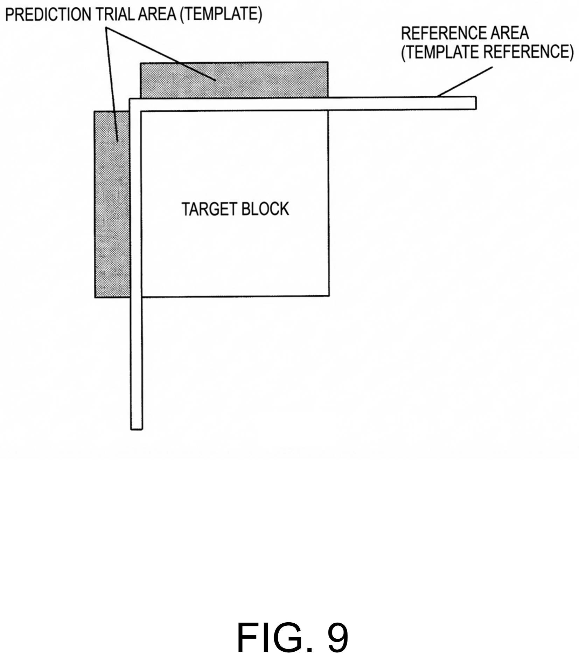

In the above-described embodiment, an example has been described in which the area specifier 1721 (2421) specifies an adjacent decoded area adjacent to a target block for intra prediction as a prediction trial area and specifies a decoded area outside the prediction trial area as a reference area, but the present invention is not limited thereto. FIG. 9 is a diagram for explaining a modification of TIMD according to the embodiment. In the modification shown in FIG. 9, the positional relationship between the prediction trial area and the reference area is opposite to that in FIG. 3. That is, the area specifier 1721 (2421) specifies an adjacent decoded area adjacent to a target block for intra prediction as a reference area, and specifies a decoded area of the reference area as a prediction trial area. Therefore, the area specifier 1721 (2421) may specify a decoded area around the target block for intra prediction as the prediction trial area, and specify a decoded area adjacent to the prediction trial area as the reference area. Note that in the modification shown in FIG. 9, the prediction mode determiner 1723 (2423) may determine a mode obtained by rotating the intra prediction mode (directional prediction) selected based on the cost by 180° as the final intra prediction mode.

In the above-described embodiment, an example has been described in which the prediction trial area includes the left sub-area A which is an adjacent decoded area on the left side of the target block and the upper sub-area B which is an adjacent decoded area on the upper side of the target block, as a plurality of sub-areas classified according to a relative positional relationship with the target block. That is, an example in which there are two sub-areas of the prediction trial area has been described.

However, the number of sub-areas of the prediction trial area is not limited to two, and there may be three or more sub-areas of the prediction trial area. For example, the left sub-area A may be vertically divided into two to define a left upper sub-area A1 and a left lower sub-area A2. Further, the upper sub-area B may be horizontally divided into two to define an upper left sub-area B1 and an upper right sub-area B2. As a result, there are four sub-areas (A1, A2, B1, B2) of the prediction trial area. Each of the cost calculator 1722 on the encoding side and the cost calculator 2422 on the decoding side may calculate the cost of each of these four sub-areas, and calculate the weighted cost of each intra prediction mode by weighting the cost of each of the four sub-areas according to the intra prediction mode for each intra prediction mode to be tried.

In the above-described embodiment, an example has been described in which 0 (zero) can be set as the weight (variable) set for the sub-area. That is, the cost calculator may calculate the cost only for a sub-area different from a part of the sub-areas by setting zero as a weight for the part of the sub-areas among the plurality of sub-areas.

A program for causing a computer to execute each process performed by the image processing apparatus (encoding apparatus 1, decoding apparatus 2) may be provided. The program may be recorded on a computer-readable medium. If a computer-readable medium is used, the program can be installed on a computer. In this case, the computer-readable medium on which the program is recorded may be a non-transitory recording medium. The non-transitory recording medium is not particularly limited, but may be, for example, a recording medium such as a CD-ROM or a DVD-ROM. Circuits for executing each process performed by the image processing apparatus (encoding apparatus 1, decoding apparatus 2) may be integrated, and the image processing apparatus may be configured as a semiconductor integrated circuit (chipset, SoC).

The functions implemented by the image processing apparatus (encoding apparatus 1, decoding apparatus 2) may be implemented in circuitry or processing circuitry including a general-purpose processor, a specific application processor, an integrated circuit, ASICs (Application Specific Integrated Circuits), a CPU (a Central Processing Unit), conventional circuits, and/or combinations thereof, programmed to implement the described functions. The processor includes transistors and other circuits, and is considered as circuitry or processing circuitry. The processor may be a programmed processor that executes a program stored in a memory. In the present specification, circuitry, unit, and means are hardware programmed to implement the described functions, or hardware that executes the functions. The hardware may be any hardware disclosed in the present specification, or any hardware programmed to implement the described functions or known to execute the functions. When the hardware is a processor considered to be a type of circuitry, the circuitry, means, or unit is a combination of hardware and software used to configure the hardware and/or the processor.

The descriptions "based on" and "depending on/in response to" used in the present disclosure do not mean "based only on" or "depending only on" unless otherwise specified. The description "based on" means both "based only on" and "based at least partially on". Similarly, the description "depending on" means both "depending only on" and "depending at least partially on". The terms "include", "comprise", and variations thereof do not mean that they include only the listed items, but mean that they may include only the listed items or may include further items in addition to the listed items. Also, the term "or" used in the present disclosure is intended not to be exclusive OR. Furthermore, any reference to elements using designations such as "first" and "second" used in the present disclosure does not generally limit the quantity or order of those elements. These designations may be used herein as a convenient method of distinguishing between two or more elements. Thus, a reference to first and second elements does not imply that only two elements may be employed there or that the first element must precede the second element in some way. In the present disclosure, when articles are added by translation, such as a, an, and the in English, for example, these articles are intended to include a plurality of items unless the context clearly indicates otherwise.

Although the embodiments have been described in detail with reference to the drawings, the specific configuration is not limited to the above, and various design changes and the like can be made without departing from the gist.

This application claims priority to Japanese Patent Application No. 2023-107062 (filed on June 29, 2023), the entire contents of which are incorporated herein by reference.

### (6) Supplementary Notes

The features regarding the above-described embodiments will be supplemented.

### (Supplementary Note 1)

An intra prediction apparatus (172, 242) that performs intra prediction in units of blocks obtained by dividing an image, comprising:
an area specification means (1721, 2421) configured to specify a decoded area around a target block for the intra prediction as a prediction trial area, and specify a decoded area adjacent to the prediction trial area as a reference area;
a cost calculation means (1722, 2422) configured to calculate a cost using a cost function by performing, for each intra prediction mode, a prediction trial of predicting the prediction trial area from the reference area;
and a prediction mode determination means (1723, 2423) configured to determine at least one intra prediction mode to be used for the intra prediction according to the cost, wherein
the prediction trial area includes a plurality of sub-areas classified according to a relative positional relationship with the target block, and
the cost calculation means performs weighting for each of the sub-areas when calculating the cost of each intra prediction mode.

### (Supplementary Note 2)

The intra prediction apparatus according to Supplementary Note 1,
wherein the cost calculation means sets a weight for each of the plurality of sub-areas according to a reference area position, which is a position of the reference area referred to in the intra prediction mode used for the prediction trial, and respective positions of the plurality of sub-areas.

### (Supplementary Note 3)

The intra prediction apparatus according to Supplementary Note 2, wherein
the cost calculation means sets a weight for a second sub-area whose distance from the reference area position is a second distance longer than a first distance to be larger than a weight for a first sub-area whose distance from the reference area position is the first distance.

### (Supplementary Note 4)

The intra prediction apparatus according to any one of Supplementary Notes 1 to 3, wherein
the cost calculation means includes, for each intra prediction mode used for the prediction trial:
a weight setting means (1722a, 2422a) configured to set a weight for each of the sub-areas according to the intra prediction mode;
a prediction trial means (1722b, 2422b) configured to perform a prediction trial for each of the sub-areas by the intra prediction mode; and
a weighted calculation means (1722c, 2422c) configured to calculate the cost for each of the sub-areas and apply the weight according to a result of the prediction trial to derive a weighted cost of the intra prediction mode, and
the prediction mode determination means determines at least one intra prediction mode to be used for the intra prediction according to the weighted cost of each intra prediction mode.

### (Supplementary Note 5)

The intra prediction apparatus according to any one of Supplementary Notes 1 to 4, wherein
the plurality of sub-areas includes a left sub-area (A) which is a decoded area on the left side of the target block, and an upper sub-area (B) which is a decoded area on the upper side of the target block.

### (Supplementary Note 6)

An encoding apparatus (1) comprising the intra prediction apparatus according to any one of Supplementary Notes 1 to 5.

### (Supplementary Note 7)

A decoding apparatus (2) comprising the intra prediction apparatus according to any one of Supplementary Notes 1 to 5.

### (Supplementary Note 8)

A program for causing a computer to function as the intra prediction apparatus according to any one of Supplementary Notes 1 to 5.

### DESCRIPTION OF REFERENCE NUMERALS

1 : Encoding apparatus
2 : Decoding apparatus
100 : Block divider
110 : Subtractor
120 : Transformer/Quantizer
121 : Transformer
122 : Quantizer
130 : Entropy encoder
140 : Inverse quantizer/inverse transformer
141 : Inverse quantizer
142 : Inverse transformer
150 : Combiner
160 : Memory
170 : Predictor
171 : Inter predictor
172 : Intra predictor
173 : Switcher
200 : Entropy decoder
210 : Inverse quantizer/inverse transformer
211 : Inverse quantizer
212 : Inverse transformer
220 : Combiner
230 : Memory
240 : Predictor
241 : Inter predictor
242 : Intra predictor
243 : Switcher
1721 : Area specifier
1722 : Cost calculator
1722a : Weight setting unit
1722b : Prediction trial unit
1722c : Weighted calculator
1723 : Prediction mode determiner
1724 : Prediction block generator
2421 : Area specifier
2422 : Cost calculator
2422a : Weight setting unit
2422b : Prediction trial unit
2422c : Weighted calculator
2423 : Prediction mode determiner
2424 : Prediction block generator

## Claims

1. An intra prediction apparatus that performs intra prediction in units of blocks obtained by dividing an image, comprising:
an area specification means configured to specify a decoded area around a target block for the intra prediction as a prediction trial area, and specify a decoded area adjacent to the prediction trial area as a reference area;
a cost calculation means configured to calculate a cost using a cost function by performing, for each intra prediction mode, a prediction trial of predicting the prediction trial area from the reference area; and
a prediction mode determination means configured to determine at least one intra prediction mode to be used for the intra prediction according to the cost, wherein
the prediction trial area includes a plurality of sub-areas classified according to a relative positional relationship with the target block, and
the cost calculation means performs weighting for each of the sub-areas when calculating the cost of each intra prediction mode.

2. The intra prediction apparatus according to claim 1, wherein
the cost calculation means sets a weight for each of the plurality of sub-areas according to a reference area position, which is a position of the reference area referred to in the intra prediction mode used for the prediction trial, and respective positions of the plurality of sub-areas.

3. The intra prediction apparatus according to claim 2, wherein
the cost calculation means sets a weight for a second sub-area whose distance from the reference area position is a second distance longer than a first distance to be larger than a weight for a first sub-area whose distance from the reference area position is the first distance.

4. The intra prediction apparatus according to any one of claims 1 to 3, wherein
the cost calculation means includes, for each intra prediction mode used for the prediction trial:
a weight setting means configured to set a weight for each of the sub-areas according to the intra prediction mode;
a prediction trial means configured to perform a prediction trial for each of the sub-areas by the intra prediction mode; and
a weighted calculation means configured to calculate the cost for each of the sub-areas and apply the weight according to a result of the prediction trial to derive a weighted cost of the intra prediction mode, and
the prediction mode determination means determines at least one intra prediction mode to be used for the intra prediction according to the weighted cost of each intra prediction mode.

5. The intra prediction apparatus according to any one of claims 1 to 3, wherein
the plurality of sub-areas includes a left sub-area which is a decoded area on the left side of the target block, and an upper sub-area which is a decoded area on the upper side of the target block.

6. The intra prediction apparatus according to claim 1, wherein
the cost calculation means calculates the cost only for a sub-area different from a part of the sub-areas by setting zero as a weight for the part of the sub-areas among the plurality of sub-areas.

7. An encoding apparatus comprising the intra prediction apparatus according to claim 1.

8. A decoding apparatus comprising the intra prediction apparatus according to claim 1.

9. A program for causing a computer to function as the intra prediction apparatus according to claim 1.
